# FASCICULE DE BREVET EUROPEEN

(11) **EP 3 030 432 B1**
(45) Date de publication et mention de la délivrance du brevet: **01.07.2020**
(21) Numéro de dépôt: 14747024.9
(22) Date de dépôt: 01.08.2014
(51) Int. Cl.: B60C 13/00

(54) **PNEUMATIQUE COMPORTANT UN ELEMENT GRAPHIQUE PARTICULIER**
REIFEN MIT EINEM SPEZIELLEN GRAFISCHEN ELEMENT
TYRE COMPRISING A PARTICULAR GRAPHIC ELEMENT

(30) Priorité: 07.08.2013 FR 1357850
(43) Date de publication de la demande: 15.06.2016
(73) Titulaire: Compagnie Générale des Etablissements Michelin, 63000 Clermont-Ferrand (FR)
(72) Inventeur: MUHLHOFF, Olivier, F-63040 Clermont-Ferrand Cedex 9 (FR); BERGER, Eric, F-63040 Clermont-Ferrand Cedex 9 (FR); GARDARIN, Benoit, F-63040 Clermont-Ferrand Cedex 9 (FR); GUIMARD, Bruno, F-63040 Clermont-Ferrand Cedex 9 (FR)
(74) Mandataire: Demaure, Pierre-Yves
(86) Numéro de dépôt international: PCT/EP2014/066644
(87) Numéro de publication internationale: WO 2015/018762

(56) Documents cités:
- EP-A2- 2 204 296
- WO-A1-2014/202731
- FR-A1- 2 409 146
- FR-A1- 2 950 552

## Description

### DOMAINE DE L'INVENTION

La présente invention concerne un pneumatique pour véhicule automobile comportant un élément graphique particulier.

### ETAT DE LA TECHNIQUE

Les flancs des pneumatiques présentent une grande quantité de marquages destinés à donner des informations techniques et légales ou à permettre aux consommateurs de distinguer l'origine du produit.

Il est constant d'essayer d'améliorer la visibilité et la lisibilité de ces marquages sur les flancs des pneumatiques.

Le document US 2008/0283169 décrit un pneumatique en matériau caoutchoutique comprenant un flanc et un marquage formé sur ce flanc. Le marquage est disposé dans un logement réalisé en creux dans le flanc. Ce marquage est en protubérance par rapport au fond du logement de sorte qu'il bénéficie d'une bonne visibilité sur le flanc du pneumatique. Le document WO2014/202731 décrit un marquage en protubérance sur un flanc entouré par une texture. Le document FR2409146 présente une texture formant un marquage, en creux dans un logement.

Cependant, au cours d'un roulage, une grande quantité de boue ou de poussière peut se loger dans le logement diminuant en conséquence le contraste entre le marquage et le fond du logement.

Il existe donc un besoin de proposer une solution permettant de conserver un marquage à fort contraste sur le flanc d'un pneumatique, au cours du roulage de ce pneumatique.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « flanc » d'un pneumatique, on entend une surface latérale du pneumatique disposée entre la bande de roulement du pneumatique et un bourrelet de ce pneumatique.

Par « élément graphique » sur un flanc, on entend tout ou partie d'un marquage présent sur ce flanc.

Par « brin », on entend un élément filiforme dont la hauteur est au moins égale à 2 fois le diamètre d'un disque de même surface qu'une section moyenne de ce brin.

Par « section moyenne » d'un brin, on entend la moyenne des sections mesurées à intervalles réguliers depuis la base du brin jusqu'au sommet de ce brin.

Par « lamelle », on entend des brins allongés qui présentent une longueur au moins égale à deux fois leur hauteur.

Par « largeur moyenne » d'une lamelle, on entend la moyenne des largeurs mesurées à intervalles réguliers depuis la base de la lamelle jusqu'au sommet de cette lamelle.

### RESUME DE L'INVENTION

L'invention concerne un pneumatique en matériau caoutchoutique comprenant un flanc et une texture comprend une pluralité de lamelles sensiblement parallèles entre elles, le pas des lamelles étant au plus égal à 0,5 mm, chaque lamelle ayant une largeur moyenne comprise entre 0,03 mm et 0,3 mm. La texture est disposée en creux dans le flanc, cette texture formant un élément graphique.

La texture, disposée dans l'élément graphique et formée par des lamelles, apporte plusieurs avantages. D'une part, cette texture permet de « piéger » tout ou partie des rayons lumineux incidents qui rencontrent l'élément graphique. Ceci permet de donner un aspect plus noir à cet élément graphique et en conséquence cela permet d'améliorer son contraste et donc sa visibilité par rapport au reste du flanc. D'autre part, cette texture particulière permet d'obtenir un toucher agréable au niveau de l'élément graphique, de type « velours ». De plus, la texture utilisée présente des propriétés hydrophobes de sorte que l'évacuation de l'eau, de la poussière ou de la boue hors de l'élément graphique est facilitée. En outre, l'élément graphique présente une plus grande pérennité. En effet, la texture étant disposée en creux dans le flanc celle-ci est protégée par le flanc contre certains types d'usure, par exemple, l'usure provoquée par des râpages trottoirs.

Selon l'invention, l'élément graphique est sélectionné parmi un groupe d'éléments graphiques comprenant au moins : des lettres, des nombres, des symboles.

Selon l'invention, les lamelles de l'élément graphique, sont en retrait par rapport au flanc du pneumatique.

Le flanc du pneumatique protège ainsi la texture de lamelles contre des agressions mécaniques pouvant s'exercer sur ce flanc. On améliore ainsi la pérennité de la texture.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement une vue en perspective d'un flanc d'un pneumatique et un élément graphique présent sur ce flanc ;
- la **figure 2** représente une vue en coupe selon l'axe X-X' de la **figure 1****,** d'un élément graphique, selon un mode de réalisation de l'invention ;
- la **figure 3** représente une vue schématique d'une texture présente dans l'élément graphique de la **figure 1** et comportant des brins ;
- la **figure 4** représente une vue schématique d'une texture présente dans l'élément graphique de la **figure 1** et comportant des lamelles.

Dans la description qui va suivre, des éléments sensiblement identiques ou similaires seront désignés par des références identiques.

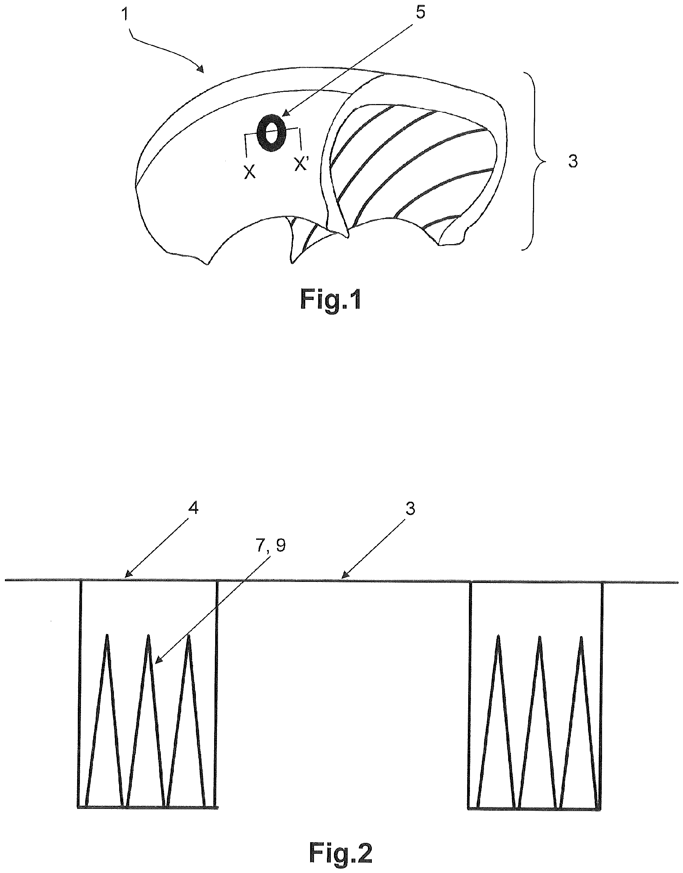

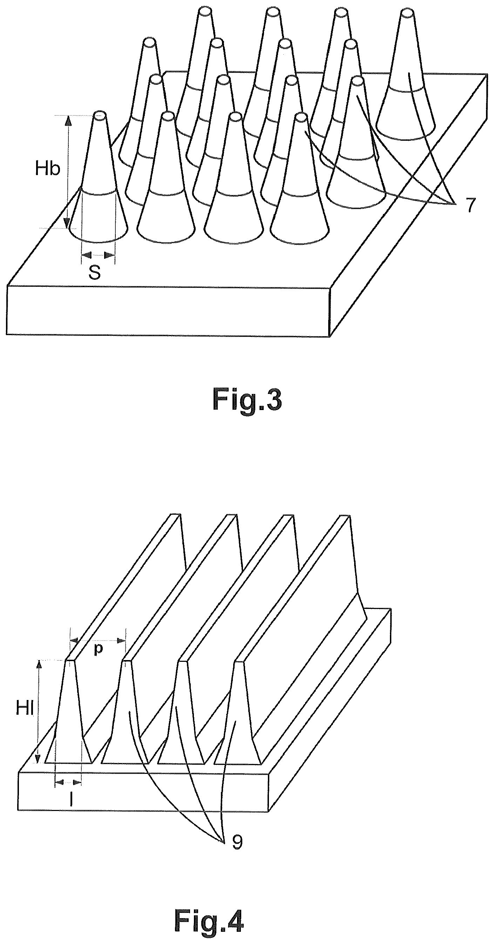

La **figure 1** représente un flanc 3 d'un pneumatique 1. Ce flanc de pneumatique comprend un élément graphique 5. L'élément graphique 5 est ici entièrement rempli par une texture. Cette texture comporte une pluralité de brins 7, tels que représentés à la **figure 3****.** Dans cette figure, les brins 7 ont une forme globalement conique avec une section diminuant dans la hauteur Hb de ces brins. Plus particulièrement, la section moyenne de chaque brin, correspondant à la moyenne des sections S mesurées à intervalles réguliers depuis la base du brin, est comprise entre 0,0007 mm² et 0,06 mm². Dans la texture, les brins sont répartis selon une densité au moins égale à cinq brins par millimètre carré.

Selon l'invention, la texture comporte une pluralité de lamelles 9, telles que représentées à la **figure 4****.** Dans cette figure, les lamelles 9 présentent une section globalement triangulaire et la largeur moyenne de chaque lamelle, correspondant à la moyenne des largeurs 1 mesurées à intervalles réguliers dans la hauteur H1 de la lamelle, est comprise entre 0,03 mm et 0,3 mm. Dans la texture, les lamelles 9 sont sensiblement parallèles entre elles et le pas P des lamelles est au plus égal à 0,5 mm.

Dans une autre variante de réalisation, la texture comporte une combinaison de brins 7 et de lamelles 9.

Selon l'invention, représentée à la **figure 2****,** les lamelles 9 de la texture sont en retrait par rapport au flanc 3, c'est-à-dire que les sommets de ces lamelles 11 sont en-dessous de la surface supérieure 4 du flanc 3.

L'invention n'est pas limitée aux exemples décrits et représentés et diverses modifications peuvent y être apportées sans sortir de son cadre.

Le flanc du pneumatique peut comporter d'autres éléments graphiques qui ne comportent pas de texture telle que décrite dans l'invention.

Enfin, les lamelles 9 de la **figure 4** peuvent être discontinues. Elles peuvent en outre présenter entre elles des différences de section.

## Revendications

1. Pneumatique en matériau caoutchoutique comprenant un flanc (3) et un 5 élément graphique (5), l'élément graphique (5) étant délimité par une surface supérieure (4) du flanc (3) et ledit élément graphique (5) étant formé par une texture, ladite texture étant disposée en creux dans le flanc (3) dans un logement et ladite texture comprenant une pluralité de lamelles (9) sensiblement parallèles entre elles, le pas des lamelles étant au plus égal à 0,5 mm, chaque lamelle ayant une largeur moyenne comprise entre 0,03 mm et 0,3 mm et les lamelles (9) étant en retrait par rapport au flanc (3) du pneumatique, les sommets desdites lamelles (9) étant en-dessous de la surface supérieure (4) dudit flanc (3) et l'élément graphique (5) étant sélectionné parmi un groupe d'éléments graphiques comprenant au moins ;
- des lettres ;
- des nombres ;
- des symboles.
et l'élément graphique (5) étant entièrement rempli par la texture et le logement ayant des parois verticales.

2. Pneumatique selon la revendication 1, dans lequel les lamelles (9) sont discontinues.

3. Pneumatique selon l'une quelconque des revendications 1 à 2, dans lequel les lamelles (9) présentent entre elles des différences de section.

4. Pneumatique selon l'une quelconque des revendications là 3, dans lequel la texture comprend une combinaison de brins (7) et de lamelles (9).

## Patentansprüche

1. Reifen aus Kautschukmaterial, der eine Seitenwand (3) und ein grafisches Element (5) umfasst, wobei das grafische Element (5) durch eine obere Fläche (4) der Seitenwand (3) begrenzt ist und das grafische Element (5) durch eine Struktur gebildet ist, wobei die Struktur vertieft in der Seitenwand (3) in einer Aufnahme angeordnet ist und die Struktur mehrere Lamellen (9) umfasst, die im Wesentlichen parallel zueinander sind, wobei der Abstand der Lamellen höchstens gleich 0,5 mm ist, wobei jede Lamelle eine mittlere Breite von zwischen 0,03 mm und 0,3 mm hat und wobei die Lamellen (9) bezüglich der Seitenwand (3) des Reifens zurückgesetzt sind, wobei die Scheitel der Lamellen (9) unter der oberen Fläche (4) der Seitenwand (3) liegen und wobei das grafische Element (5) aus einer Gruppe von grafischen Elementen ausgewählt ist, die mindestens Folgendes umfasst:
- Buchstaben;
- Zahlen;
- Symbole,
und das grafische Element (5) vollständig von der Struktur gefüllt ist und wobei die Aufnahme vertikale Wände aufweist.

2. Reifen nach Anspruch 1, wobei die Lamellen (9) unterbrochen sind.

3. Reifen nach einem der Ansprüche 1 bis 2, wobei die Lamellen (9) untereinander Querschnittsunterschiede aufweisen.

4. Reifen nach einem der Ansprüche 1 bis 13, wobei die Struktur eine Kombination aus Strängen (7) und Lamellen (9) umfasst.

## Claims

1. Tyre made of rubber material comprising a sidewall (3) and a graphic element (5), the graphic element (5) being delimited by an upper surface (4) of the sidewall (3) and said graphic element (5) being formed by a texture, said texture being recessed into the sidewall (3) and said texture comprising a plurality of substantially mutually parallel lamellae (9), the spacing of the lamellae being at most equal to 0.5 mm, each lamella having a mean width of between 0.03 mm and 0.3 mm, the lamellae being recessed into the sidewall (3) texture is recessed into the sidewall (3), the tips of this lamellae being below the upper surface (4) of said sidewall (3) and the graphic element (5) being selected from a group of graphic elements comprising at least:
- letters;
- numbers;
- symbols;
and the graphic element (5) being entirely filled by the texture and the recess having vertical walls.

2. Tyre according to Claim 1, in which the lamellae are discontinuous.

3. Tyre according to either one of Claims 1 and 2, in which the lamellae have differences in cross section from one another.

4. Tyre according to either one of Claims 1 to 3, in which the texture comprises a combination of strands (7) and lamellae (9).
